# EUROPEAN PATENT APPLICATION

(11) **EP 4 194 252 A1**
(43) Date of publication of application: **14.06.2023**
(21) Application number: 21213100.7
(22) Date of filing: 08.12.2021
(51) Int. Cl.: B60L 53/10, B60L 53/18, H02J 7/02

(54) **POWER CONVERTER AND CHARGING SYSTEM HAVING THE SAME**

(71) Applicant: Energy Moana Technology Co., Ltd., Taichung City 407604 (TW)
(72) Inventor: LU, Kuan-Jen, 407604 Taichung City (TW); WU, Tsung-Hsun, 407604 Taichung City (TW)
(74) Representative: Viering, Jentschura & Partner mbB Patent- und Rechtsanwälte

(57) **Abstract**

A charging system (1, 2) includes a charging station (10) and a power converter (20). The charging station (10) includes a power output device (14) for outputting a first DC power. The power converter (20) includes a housing (22) and a converting device (28). The housing (22) has a battery socket (26) that has an output connecting port (262) and is adapted to be engaged with a LiFePO4 battery (40). The output connecting port (262) is detachably and electrically connected to a connecting port (42) of the LiFePO4 battery (40). The converting device (28) is disposed in the housing (22) and is electrically connected to the power output device (14) and the output connecting port (262). The converting device (28) converts the first DC power into a second DC power to charge the LiFePO4 battery (40).

## Description

### BACKGROUND OF THE INVENTION

### Technical Field

The present invention relates generally to a charging device, and more particularly to a power converter and a charging system having the same that could charge a lithium iron phosphate (LiFeP04) battery.

### Description of Related Art

In recent years, bicycle leisure activities have become popular and become a tool for leisure sports, and in addition to ordinary bicycles that rely solely on human pedaling as the driving force for forwarding movement, electric-assisted bicycles that assist human pedaling by an auxiliary motor are also another option for bicycle leisure activities with the development of technology. In other words, the user only needs to use a small pedaling force to cooperate with the auxiliary motor to drive the electric-assisted bicycle moving forward. Therefore, compared with ordinary bicycles, the electric-assisted bicycles allow the user to enjoy the fun of riding a bicycle less laboriously.

Considering an overall weight and size of the electric-assisted bicycle, a battery of the electric-assisted bicycle is usually not too large, which will limit the capacity of the battery. Additionally, the conventional electric-assisted bicycles need to be charged at home and cannot be charged outside, therefore the user always need to pay attention to the remaining capacity when riding the electric-assisted bicycle outside to avoid the dilemma of running out of electricity.

### BRIEF SUMMARY OF THE INVENTION

In view of the above, the primary objective of the present invention is to provide a power converter and a charging system having the same, which could increase a convenience of charging an electric-assisted bicycle outside.

The present invention provides a charging system adapted to charge a LiFePO4 battery, wherein the LiFePO4 battery has a connecting port. The charging system includes a charging station and a power converter, wherein the charging station includes a power output device. The power output device is adapted to output a first DC power having a first voltage. The power converter includes a housing and a converting device, wherein the housing has a battery socket that has an output connecting port and is adapted to be engaged with the LiFePO4 battery. The output connecting port is adapted to be detachably and electrically connected to the connecting port of the LiFePO4 battery. The converting device is disposed in the housing and is electrically connected to the power output device and the output connecting port. The converting device converts the first DC power into a second DC power and outputs the second DC power to the output connecting port for charging the LiFePO4 battery. The second DC power has a second voltage. The converting device steps down the first voltage to the second voltage.

The present invention further provides a power converter that is adapted to be connected to a charging station and to charge a LiFePO4 battery, wherein the charging station is adapted to output a first DC power that has a first DC voltage, and the LiFePO4 battery has a connecting port. The power converter includes a housing and a converting device, wherein the housing has a battery socket. The battery socket has an output connecting port and is adapted to be engaged with the LiFePO4 battery. The output connecting port is adapted to be detachably and electrically connected to the connecting port of the LiFePO4 battery. The converting device is disposed in the housing and is adapted to be electrically connected to the charging station and the output connecting port, wherein the converting device converts the first DC power into a second DC power and outputs the second DC power to the output connecting port to charge the LiFePO4 battery. The second DC power has a second voltage. The converting device steps down the first voltage to the second voltage.

With the aforementioned design, the power converter could convert the first DC power of the charging station with higher voltage into the second DC power with lower voltage, thereby the charging system of the present invention could charge the LiFePO4 battery that requires lower charging voltage, increasing a convenience of charging the electric-assisted bicycle outside.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic view of the charging system according to a first embodiment of the present invention;
FIG. 2 is a schematic view of the charging system according to the first embodiment of the present invention, showing the charging cable is engaged with the charging cable socket;
FIG. 3 is a schematic view of the charging system according to the first embodiment of the present invention, showing the LiFePO4 battery is engaged with the battery socket;
FIG. 4 is a schematic view of the charging system according to the first embodiment of the present invention, showing the charging cable is engaged with the charging cable socket and the LiFePO4 battery is engaged with the battery socket; and
FIG. 5 is a schematic view of the charging system according to a second embodiment of the present invention.

### DETAILED DESCRIPTION OF THE INVENTION

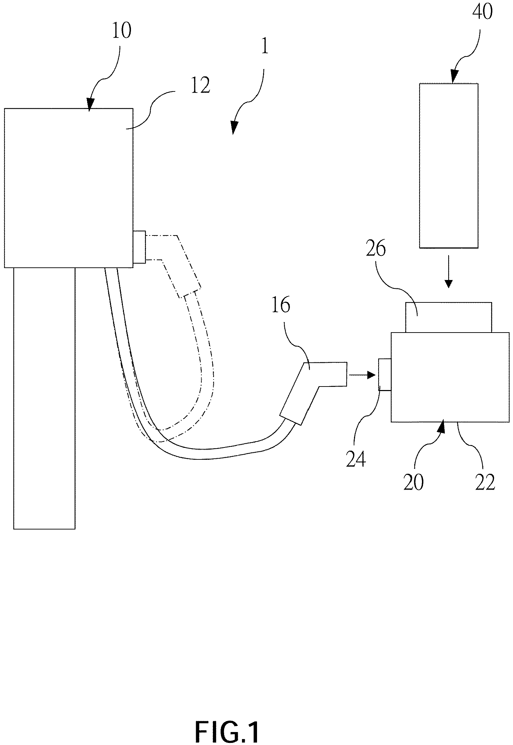

A charging system 1 according to a first embodiment of the present invention is illustrated in FIG. 1 to FIG. 4 and is adapted to charge a LiFePO4 battery 40, wherein the LiFePO4 battery 40 is a battery of an electric-assisted bicycle. A rated voltage of the LiFePO4 battery 40 is 36V, and a quantity of electric charge of the LiFePO4 battery 40 is 6.6Ah, and a standard charging current of the LiFePO4 battery 40 is 6.6A, wherein the LiFePO4 battery 40 could be charged twice as fast (2C charging), and the fast charging current is 13.2A. The LiFePO4 battery 40 includes a connecting port 42, a communicating module 44, a battery management module 46, and a battery cell assembly 48, wherein the connecting port 42 has a communicating port 422 and a power port 424. The communicating port 422 is electrically connected to the communicating module 44, and the power port 424 is electrically connected to the battery management module 46. The battery management module 46 is electrically connected to the communicating port 422 and the battery cell assembly 48. The communicating module 44 takes the CAN-bus protocol as an example. The battery management module 46 is adapted to switch modes between output a power to the power port 424 via the battery cell assembly 48 and receive a charging power from the power port 424 to charge the battery cell assembly 48. The battery management module 46 monitors status of the battery cell assembly 48, wherein the status includes voltage, current, temperature, etc. The battery management module 46 could transmit the battery status to outside through the communicating module 44 via the communicating port 422 and could transmit a battery information to outside through the communicating module 44, wherein the battery information includes an identification code, a required charging voltage, a charging current, etc.

The charging system 1 includes a charging station 10 and a power converter 20, wherein the charging station 10 is adapted to supply power to an electric vehicle, such as an electric scooter or an electric car. The charging station 10 includes a body 12, a power output device 14, and a charging cable 16, wherein the power output device 14 is located in the body 12 and is adapted to output a first DC power having a first voltage and a first current. The power output device 14 converts an AC power to the first DC power. In the current embodiment, the voltage of the first DC power has an adjustable voltage range, and the first voltage is a minimum voltage in an adjustable voltage range. For instance, a maximum voltage of the adjustable voltage range is 100V, and a minimum voltage (i.e., the first voltage) is 50V. The power output device 14 could output different voltages and different currents to meet the charging voltages required by different electric vehicles.

The charging cable 16 is electrically connected to the power output device 14, and the first DC power is outputted by the charging cable 16. In the current embodiment, the charging cable 16 has a connecting port 162, wherein the connecting port 162 includes a communicating port 162a and a power port 162b. The power port 162b is electrically connected to the power output device 14 to output the first DC power.

The charging station 10 includes a communicating module (hereafter called a first communicating module 18), wherein the first communicating module 18 is electrically connected to the power output device 14 and the communicating port 162a of the charging cable 16. The first communicating module 18 takes a CAN-bus protocol as an example. The power output device 14 could communicate with an outside communicating module via the first communicating module 18. For instance, when the charging cable 16 is connected to an electric vehicle, the first communicating module 18 of the charging station 10 communicates with a communicating module of the electric vehicle, thereby obtaining a battery information of the electric vehicle, wherein the battery information includes a charging voltage required by the battery, a charging current required by the battery, etc. The power output device 14 determines a voltage and a current of the first DC power to be outputted based on the obtained battery information.

The power converter 20 is adapted to step down the first DC power to a second DC power, thereby charging the LiFePO4 battery 40 that requires a lower charging voltage. The power converter 20 includes a housing 22 and a converting device 28, wherein the housing 22 has a charging cable socket 24 and a battery socket 26. The charging cable socket 24 has an input connecting port 242 that could be detachably and electrically connected to the connecting port 162 in the charging cable 16. The input connecting port 242 has a communicating port 242a and a power port 242b, wherein when the charging cable 16 is engaged with the charging cable socket 24, the communicating port 162a and the power port 162b of the connecting port 162 of the charging cable 16 are respectively connected to the communicating port 242a and the power port 242b of the input connecting port 242.

The battery socket 26 has an output connecting port 262 and is adapted to be inserted by the LiFePO4 battery 40, wherein the output connecting port 262 is detachably and electrically connected to the connecting port 42 of the LiFePO4 battery 40. The output connecting port 262 has a communicating port 262a and a power port 262b, wherein when the LiFePO4 battery 40 is engaged with the battery socket 26, the communicating port 422 and the power port 424 of the connecting port 42 of the LiFePO4 battery 40 are respectively connected to the communicating port 262a and the power port 262b of the output connecting port 262.

The converting device 28 is disposed in the housing 22 and is electrically connected to the power output device 14 and the output connecting port 262. In the current embodiment, the converting device 28 is electrically connected to the power output device 14 via the input connecting port 242 and the charging cable 16.

The converting device 28 converts the first DC power to the second DC power and outputs the second DC power to the output connecting port 262, wherein the second DC power has a second voltage and a second current. The converting device 28 steps down the first voltage to the second voltage, so that the second voltage could be used as a charging voltage to the LiFePO4 battery 40. In the current embodiment, the converting device 28 includes a step-down module 30 and a charging circuit 36, wherein the step-down module 30 is electrically connected to the power port 242b of the input connecting port 242 and is adapted to step the first voltage down to the second voltage. The step-down module 30 includes an isolation transformer 32 and a step-down circuit 34, wherein the isolation transformer 32 is electrically connected to the power port 242b of the input connecting port 242 and is adapted to electrically isolate the high voltage of the charging station 10, thereby improving a safety of the power converter 20. The isolation transformer 32 steps down an electricity of the first DC power to a first predetermined DC power with a first predetermined voltage and outputs the first predetermined DC power to the step-down circuit 34, wherein the step-down circuit 34 is a buck circuit, which steps down the first predetermined voltage to a second predetermined DC power with a stable second predetermined voltage and outputs the second predetermined DC power to the charging circuit 36. The charging circuit 36 is a charging circuit in a constant-current constant-voltage (CC-CV) type and is electrically connected to the power port 262b of the output connecting port 262, wherein the charging circuit 36 converts the second predetermined DC power to the second DC power and outputs the second DC power to the power port 262b of the output connecting port 262. A maximum value of the second voltage of the second DC power is 43.8V, the second current (i.e., an output current) is 13.2A, and the second current is twice the standard charging current of the LiFePO4 battery 40, thereby the LiFePO4 battery 40 could be charged twice as fast.

Additionally, the power converter 20 further includes a communicating module (hereafter called a second communicating module 38), wherein the second communicating module 38 is electrically connected to the converting device 28 and is electrically connected to the communicating port 242a of the input connecting port 242 and the communicating port 262a of the output connecting port 262 respectively. The second communicating module 38 takes a CAN-bus protocol as an example. The second communicating module 38 could communicate with the first communicating module 18 of the charging station 10 and the communicating module 44 of the LiFePO4 battery 40. In the current embodiment, the second communicating module 38 is electrically connected to the charging circuit 36 of the converting device 28.

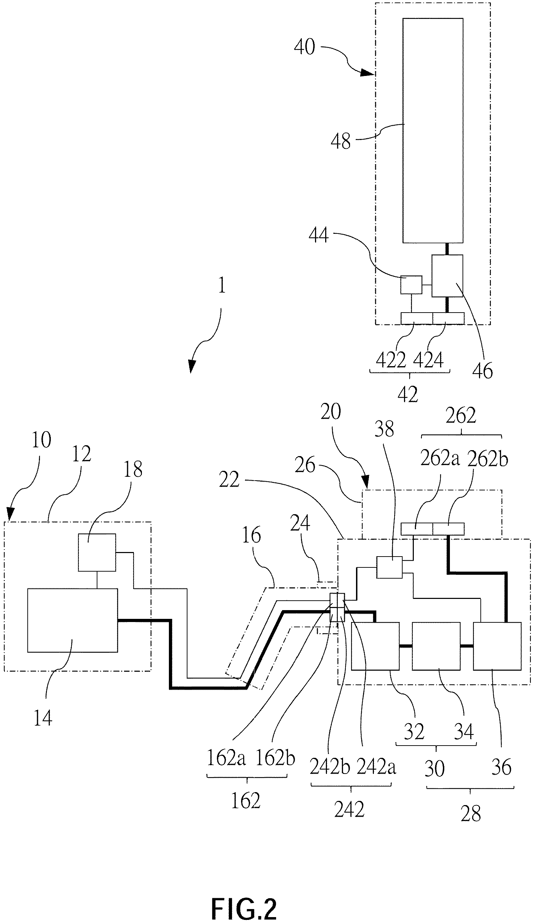

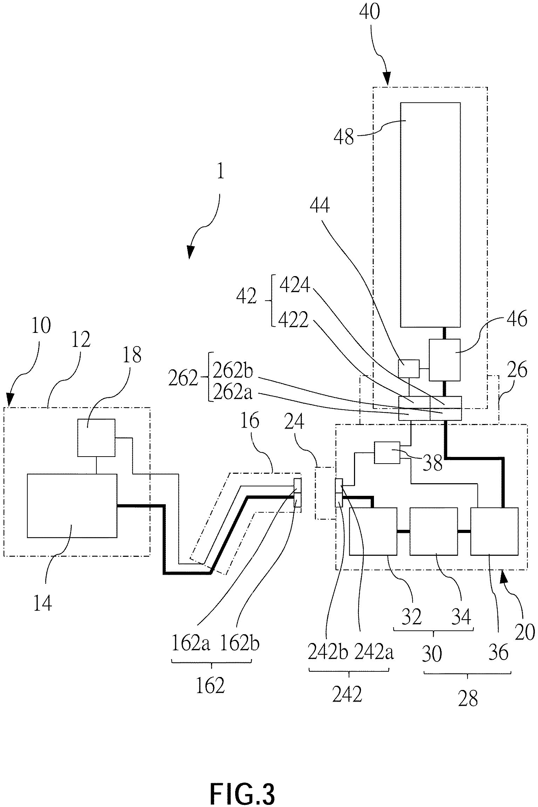

While using the charging system 1, the user could choose to either first insert the charging cable 16 into the charging cable socket 24 (as shown in FIG. 2) or first insert the LiFePO4 battery 40 into the battery socket 26 (as shown in FIG. 3).

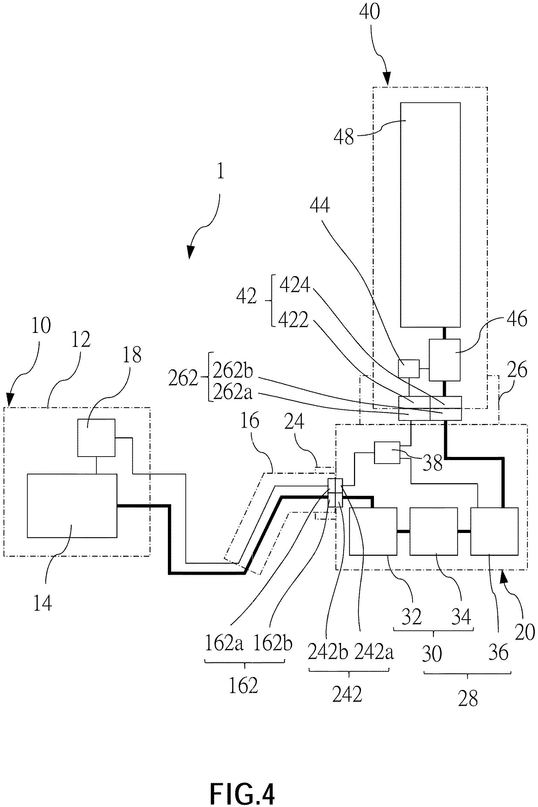

Take the state shown in FIG. 2 as an example, when the charging cable 16 is engaged with the charging cable socket 24, and the output connecting port 262 has not been electrically connected to the connecting port 42 of the LiFePO4 battery 40, the power output device 14 does not output the first DC power. In the current embodiment, when a communication between the second communicating module 38 and the communicating module 44 of the LiFePO4 battery 40 is not built, and the charging circuit 36 detects that the power port 262b does not be connected to the power port 424 of the LiFePO4 battery 40, the second communicating module 38 does not request the power output device 14 of the charging station 10 output the first DC power. Referring to FIG. 4, when the LiFePO4 battery 40 is engaged with the battery socket 26 and the output connecting port 262 is electrically connected to the connecting port 42 of the LiFePO4 battery 40, the second communicating module 38 sends a power output command to the first communicating module 18, so that the power output device 14 outputs the first DC power. In the current embodiment, when the second communicating module 38 communicates with the communicating module 44 of the LiFePO4 battery 40, the second communicating module 38 receives the battery information and the battery state coming from the LiFePO4 battery 40, and when the charging circuit 36 detects the power port 262b of the output connecting port 262 is connected to the power port 424 of the LiFePO4 battery 40, the charging circuit 36 sends a ready command to the second communicating module 38. After that, the second communicating module 38 sends the power output command to the first communicating module 18, and the power output device 14 outputs the first DC power, and the converting device 28 converts the first DC power to the second DC power, and outputs the second DC power to the output connecting port 262, thereby charging the LiFePO4 battery 40 twice as fast.

Take the state shown in FIG. 3 as an example, when the LiFePO4 battery 40 is engaged with the battery socket 26 and the output connecting port 262 is electrically connected to the connecting port 42 of the LiFePO4 battery 40, the second communicating module 38 could communicate with the communicating module 44 of the LiFePO4 battery 40. When the second communicating module 38 receives the battery information and the battery state that comes from the LiFePO4 battery 40, and the charging circuit 36 detects that the power port 262b of the output connecting port 262 is connected to the power port 424 of the LiFePO4 battery 40, the charging circuit 36 sends a ready command to the second communicating module 38. Referring to FIG. 4, when the charging cable 16 is engaged with the charging cable socket 24, the power output device 14 does not output the first DC power yet. When the second communicating module 38 communicates with the first communicating module, and the converting device 28 detects that the power port 162b of the charging cable 16 is connected to the power port 242b of the input connecting port 242, the second communicating module 38 sends the power output command to the first communicating module 18, and the power output device 14 outputs the first DC power, and the converting device 28 converts the first DC power into the second DC power and outputs the second DC power to the output connecting port 262, thereby charging the LiFePO4 battery 40 twice as fast.

During a process of charging (i.e., in a state when the converting device 28 outputs the second DC power), when the output connecting port 262 electrically connected to the connecting port 42 of the LiFePO4 battery 40 is changed to be not electrically connected to the connecting port 42 of the LiFePO4 battery 40, the converting device 28 stop outputting the second DC power to the output connecting port 262. In the current embodiment, either when the second communicating module 38 could not communicate with the communicating module 44 of the LiFePO4 battery 40 or when the charging circuit 36 detects that the power port 262b of the output connecting port 262 is not connected to the power port 424 of the LiFePO4 battery 40, the charging circuit 36 stops outputting the second DC power. In this way, a risk of electric shock when the LiFePO4 battery 40 is removed from the battery socket 26 during the charging process could be prevented. After that, the second communicating module 38 immediately sends a power stop command to the first communicating module 18 to make the power output device 14 stops outputting the first DC power, thereby preventing the high voltage of the charging station 10 from being continuously input to the power converter 20.

When a voltage of the LiFePO4 battery 40 is charged to a predetermined voltage, the converting device 28 stops outputting the second DC power to the output connecting port 262, and the second communicating module 38 sends the power stop command to the first communicating module 18 to make the power output device 14 stops outputting the first DC power. In the current embodiment, when the charging circuit 36 detects that the voltage of the LiFePO4 battery 40 reaches the predetermined voltage, the charging circuit 36 stops outputting the second DC power and send a charge complete command to the second communicating module 38, and the second communicating module 38 sends the power stop command to the first communicating module 18 to make the power output device 14 stops outputting the first DC power, thereby completing the charging of the LiFePO4 battery 40.

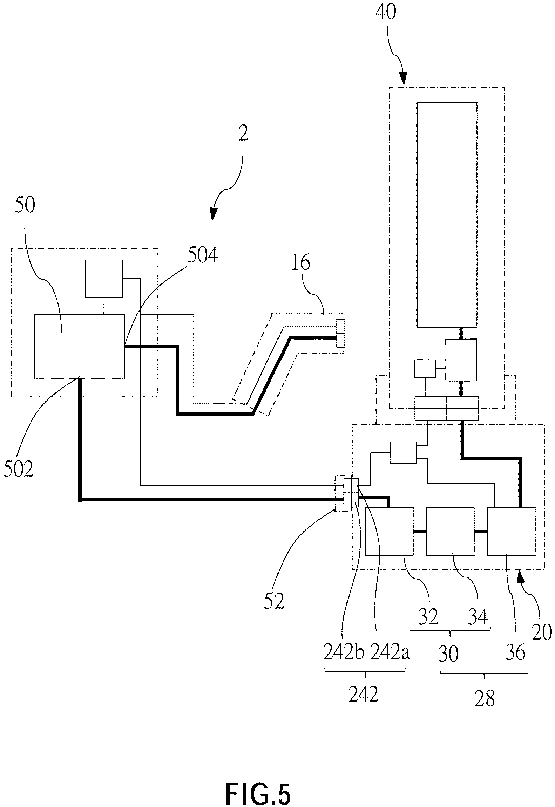

A charging system 2 according to a second embodiment of the present invention is illustrated in FIG. 5, which has almost the same structures as that of the first embodiment, except that a power output device 50 of the charging system 2 of the current embodiment has a first output port 502 and a second output port 504, wherein the first output port 502 and the second output port 504 are respectively and electrically connected to the converting device 28 and the charging cable 16. In the current embodiment, the first output port 502 is connected to the input connecting port 242 of the power converter 20 via a socket 52. The power output device 50 outputs the first DC power to the power converter 20 via the first output port 502, thereby charging the LiFePO4 battery 40. In an embodiment, the first output port 502 could be directly and electrically connected to the converting device 28 via a cable.

When the charging cable 16 is connected to an electric vehicle, the power output device 50 outputs a third DC power to charge the electric vehicle via the second output port 504 through the charging cable 16.

With the aforementioned design, the power converter could convert the first DC power of the charging station with higher voltage into the second DC power with lower voltage, thereby the charging system of the present invention could charge the LiFePO4 battery that requires lower charging voltage, increasing a convenience of charging the electric-assisted bicycle outside.

## Claims

1. A charging system (1, 2) adapted to charge a LiFePO4 battery (40), wherein the LiFePO4 battery (40) has a connecting port (42); the charging system (1, 2) comprising:
a charging station (10) comprising a power output device (14), wherein the power output device (14) is adapted to output a first DC power having a first voltage; and
a power converter (20) comprising a housing (22) and a converting device (28), wherein the housing (22) has a battery socket (26) that has an output connecting port (262) and is adapted to be engaged with the LiFePO4 battery (40); the output connecting port (262) is adapted to be detachably and electrically connected to the connecting port (42) of the LiFePO4 battery (40); the converting device (28) is disposed in the housing (22) and is electrically connected to the power output device (14) and the output connecting port (262); the converting device (28) converts the first DC power into a second DC power and outputs the second DC power to the output connecting port (262) for charging the LiFePO4 battery (40); the second DC power has a second voltage; the converting device (28) steps the first voltage down to the second voltage.

2. The charging system (1, 2) as claimed in claim 1, wherein the charging station (10) comprises a charging cable (16) electrically connected to the power output device (14); the first DC power is outputted by the charging cable (16); the housing (22) has a charging cable socket (24) that has an input connecting port (242); the charging cable socket (24) is adapted to be engaged with the charging cable (16), and the converting device (28) is electrically connected to the power output device (14) via the input connecting port (242) and the charging cable (16).

3. The charging system (2) as claimed in claim 1, wherein the charging station (10) comprises a charging cable (16); the power output device (14) has a first output port (502) and a second output port (504) that are respectively connected to the converting device (28) and the charging cable (16); the power output device (14) outputs the first DC power via the first output port (502) and outputs a third DC power via the second output port (504) through the charging cable (16).

4. The charging system (1, 2) as claimed in claim 1, wherein the charging station (10) comprises a first communicating module (18) electrically connected to the power output device (14); the power converter (20) comprises a second communicating module (38) that is adapted to communicate with the first communicating module (18); when the output connecting port (262) is not electrically connected to the connecting port (42) of the LiFePO4 battery (40), the power output device (14) does not output the first DC power; when the LiFePO4 battery (40) is engaged with the battery socket (26) and the output connecting port (262) is electrically connected to the connecting port (42) of the LiFePO4 battery (40), the second communicating module (38) sends a power output command to the first communicating module (18) to make the power output device (14) outputs the first DC power.

5. The charging system (1, 2) as claimed in claim 4, wherein in a state that when the converting device (28) outputs the second DC power, when the output connecting port (262) electrically connected to the connecting port (42) of the LiFePO4 battery (40) is changed to be not electrically connected to the connecting port (42) of the LiFePO4 battery (40), the converting device (28) stops outputting the second DC power to the output connecting port (262).

6. The charging system (1, 2) as claimed in claim 5, wherein when the converting device (28) is electrically connected to the second communicating module (38) and when the converting device (28) stops outputting the second DC power to the output connecting port (262), the second communicating module (38) sends a power stop command to the first communicating module (18) to make the power output device (14) stops outputting the first DC power.

7. The charging system (1, 2) as claimed in claim 4, wherein the converting device (28) is electrically connected to the second communicating module (38); when a voltage of the LiFePO4 battery (40) is charged to a predetermined voltage, the converting device (28) stops outputting the second DC power to the output connecting port (262), and the second communicating module (38) sends a power stop command to the first communicating module (18) to make the power output device (14) stops outputting the first DC power.

8. The charging system (1, 2) as claimed in claim 1, wherein a voltage of the first DC power that the power output device (14) of the charging station (10) outputs has an adjustable voltage range, and the first voltage is a minimum voltage in the adjustable voltage range.

9. The charging system (1, 2) as claimed in claim 1, wherein the second DC power outputted by the converting device (28) has an output current that is twice a charging current of the LiFePO4 battery (40).

10. A power converter (20) that is adapted to be connected to a charging station (10) and to charge a LiFePO4 battery (40), wherein the charging station (10) is adapted to output a first DC power that has a first DC voltage, and the LiFePO4 battery (40) has a connecting port (42); the power converter (20) comprising:
a housing (22) having a battery socket (26), wherein the battery socket (26) has an output connecting port (262) and is adapted to be engaged with the LiFePO4 battery (40); the output connecting port (262) is adapted to be detachably and electrically connected to the connecting port (42) of the LiFePO4 battery (40); and
a converting device (28) disposed in the housing (22) and adapted to be electrically connected to the charging station (10) and the output connecting port (262), wherein the converting device (28) converts the first DC power into a second DC power and outputs the second DC power to the output connecting port (262) to charge the LiFePO4 battery (40); the second DC power has a second voltage; the converting device (28) steps the first voltage down to the second voltage.

11. The power converter (20) as claimed in claim 10, wherein the charging station (10) comprises a charging cable (16); the first DC power is outputted via the charging cable (16); the housing (22) has a charging cable socket (24) that has an input connecting port (242) and is adapted to be engaged with the charging cable (16); the converting device (28) is electrically connected to the charging cable (16) via the input connecting port (242).

12. The power converter (20) as claimed in claim 10, further comprising a communicating module (38), wherein when the output connecting port (262) is not electrically connected to the connecting port (42) of the LiFePO4 battery (40), the charging station (10) does not output the first DC power; when the LiFePO4 battery (40) is engaged wtith the battery socket (26) and the output connecting port (262) is electrically connected to the connecting port (42) of the LiFePO4 battery (40), the communicating module (38) sends a power output command to the charging station (10) to make the charging station (10) outputs the first DC power.

13. The power converter (20) as claimed in claim 12, wherein in a state that the converting device (28) outputs the second DC power, when the output connecting port (262) electrically connected to the connecting port (42) of the LiFePO4 battery (40) is changed to be not electrically connected to the connecting port (42) of the LiFePO4 battery (40), the converting device (28) stops outputting the second DC power to the output connecting port (262).

14. The power converter (20) as claimed in claim 13, wherein the converting device (28) is electrically connected to the communicating module (38); when the converting device (28) stops outputting the second DC power to the output connecting port (262), the communicating module (38) sends a power stop command to the charging station (10) to make the charging station (10) stops outputting the first DC power.

15. The power converter (20) as claimed in claim 12, wherein the converting device (28) is electrically connected to the communicating module (38); when a voltage of the LiFePO4 battery (40) is charged to a predetermined voltage, the converting device (28) stops outputting the second DC power to the output connecting port (262), and the communicating module (38) sends a power stop command to the charging station (10) to make the charging station (10) stops outputting the first DC power.
